**Europäisches Patentamt**

**European Patent Office**

**Office européen des brevets**

(11) Veröffentlichungsnummer: **0 149 070**
**A2**

## (12) EUROPÄISCHE PATENTANMELDUNG

(21) Anmeldenummer: **84114342.3**

(22) Anmeldetag: **27.11.84**

(51) Int. Cl.⁴: **B 60 T 17/22**
**B 60 Q 9/00**

(30) Priorität: **12.12.83 DE 3344862**
**20.12.83 DE 3346018**

(43) Veröffentlichungstag der Anmeldung:
**24.07.85 Patentblatt 85/30**

(84) Benannte Vertragsstaaten:
**BE DE FR GB IT NL SE**

(71) Anmelder: **Knorr-Bremse GmbH**
**Moosacher Strasse 80**
**D-8000 München 40(DE)**

(72) Erfinder: **Thiele, Heinz-Hermann**
**Haushoferstrasse 6**
**D-8000 München 81(DE)**

(54) **Handbrems- bzw. Feststellbremseinrichtung für Fahrzeuge.**

(57) Die Handbrems- bzw. Feststellbremseinrichtung für Fahrzeuge mit einem in einer Park- bzw. Feststellbremsstellung (C) mittels eines Rastgliedes (10) verrastbaren Handgriff (15) weist eine überwachvorrichtung auf, welche das vollständige Einrasten des Rastgliedes (10) überwacht. Nur bei vollständig eingerastetem Rastglied (10) wird eine Schaltvorrichtung (23) zum Betätigen eines optischen oder akustischen Kontrollzeichens (27) eingeschaltet. Es kann zusätzlich die Entwicklung der Bremsen-Zuspannkraft überwacht werden, derart, daß diese Betätigung des Kontrollzeichens (27) mitüberwacht.

Fig. 1

Croydon Printing Company Ltd.

0149070

Knorr-Bremse GmbH
Moosacher Str. 80
8000 München 40

München, den 15.12.1983
TP-fe
1770

## Handbrems- bzw. Feststellbremseinrichtung
## für Fahrzeuge

Die Erfindung bezieht sich auf eine Hand- bzw. Feststell-bremseinrichtung für Fahrzeuge, insbesondere Handbrems-ventileinrichtung für druckluftgebremste Kraftfahrzeuge, mit einem Betätigungsglied, das in einer Park- bzw. Feststellbrems-stellung mittels eines in eine Raststellung bewegbaren Rastgliedes einrastbar ist.

Bei Handbremsventileinrichtungen für druckluftgebremste Kraftfahrzeuge der vorstehend genannten Art, beispielsweise gemäß der DE-OS 29 53 606 oder DE-AS 24 35 243, ist es bekannt, das als Handgriff ausgebildete Betätigungs-glied mit einer Rastiervorrichtung zu koppeln. Die Rastiervorrichtung umfaßt hierbei zumeist eine gehäusefeste Schaltkulisse, welche mit einem Rastglied zusammenwirkt, wobei das Rastglied mit dem um eine Drehachse schwenkbaren Handgriff gekoppelt ist und zudem zum Ermöglichen des Rastierens eine weitere Bewegungsmöglichkeit aufweist. Der Handgriff ist bei diesen Hand- bzw. Feststellbremseinrichtungen innerhalb eines Bereiches frei bewegbar, welcher sich von der Lösestellung bis zur maximalen Bremsstellung erstreckt; am Handgriff greifen dabei direkt oder indirekt elastische Mittel an, welche ihn aus jeder dieser Bremsstellungen in die Lösestellung zurückzubewegen suchen. Die maximale Bremsstellung ist durch einen an der Rastiervorrichtung angeordneten, gegen Federkraft überwindbaren Anschlag begrenzt,

- 2 -

nach Überwinden dieses Anschlages rastet das Rastglied durch entsprechende Ausbildung der Schaltkulisse in eine gesonderte Raststellung ein, wobei es im Zusammenwirken mit der Schaltkulisse ein selbsttätiges, ungewolltes Zurückbewegen des Handgriffes aus dieser rastierten, eine maximale Bremsung bewirkenden und insbesondere zum gebremsten Abstellen des Fahrzeuges dienenden "Parkbremsstellung" in eine der vorstehend erwähnten Stellungen, insbesondere in die Lösestellung, ausschließt. Nur nach einem willkürlich ausführbaren, gesonderten Bedienvorgang, zumeist einem bezogen auf die Drehachse radialen Verschieben des Handgriffes und hierdurch bewirkten Zurückstellen des Rastgliedes aus seiner Raststellung in eine andere Stellung, ist der Handgriff aus der Parkbremsstellung in eine der zuvor erwähnten Bremsstellungen bzw. die Lösestellung zurückstellbar, so daß das Kraftfahrzeug wieder in Betrieb genommen werden kann. Bei Handbremsventileinrichtungen für Kraftfahrzeuge, welche mit druckluftgebremsten Anhängern fahren können, beispielsweise auch bei den Handbremsventileinrichtungen nach den vorstehend genannten Druckschriften, schließt sich an die Parkbremsstellung, in welcher sowohl eine Bremsung des Kraftfahrzeuges wie des Anhängers bewirkt wird, eine gesonderte Prüfstellung an, in welche der Handgriff entgegen einer elastischen Rückstellkraft bei in seiner Raststellung verbleibendem Rastglied bewegbar ist; in der Prüfstellung wird bei weiterhin eingebremst bleibendem Kraftfahrzeug die Anhängerbremse gelöst, um zu prüfen, ob die Bremsung des Kraftfahrzeuges allein zum sicheren Festhalten des Lastzuges ausreicht. Nach Freigabe des Handgriffes in der Prüfstellung kehrt dieser selbsttätig in die Parkbremsstellung zum Wiedereinbremsen auch des Anhängers zurück.

Bei den vorstehend beschriebenen Handbremsventileinrichtungen besteht die Eigenart, daß bei flüchtiger, mangelhafter Einstellung des Handgriffes in die Parkbremsstellung das Rastglied nicht voll in seine Raststellung
gelangt, es sich vielmehr nur etwas in Richtung zu seiner
Raststellung bewegt und in einer Zwischenstellung, also
nicht vollständig eingerastet verharrt; derartige Stellungen
sind bei Rastiereinrichtungen als "Zahn-auf-Zahn-Stellung"
bekannt. In einer derartigen Zwischenstellung kann der
Handgriff nach seiner Freigabe zwar in der Parkbremsstellung verbleiben, es besteht jedoch die Gefahr, daß
beispielsweise durch Erschütterungen des Fahrzeuges das
Rastglied zurückschnappt oder zurückgedrängt wird, die
Rastierung somit vollständig ausrastet und der Handgriff
sich sodann selbsttätig unter Lösen der Fahrzeugbremsen
in seine Lösestellung bewegt. Hierdurch ist ein ungewolltes Abrollen des gegebenenfalls führerlosen Kraftfahrzeuges möglich, das führerlos abrollende Fahrzeug kann
schwere Unfälle verursachen.

Zum Vermeiden der vorstehend erwähnten Eigenheit der
üblichen Rastiervorrichtungen ist es aus der DE-AS 27 12 945
bekannt, eine vollständig willkürlich betätigbare
Rastiervorrichtung für den Handgriff vorzusehen; einemit
einer derartig ausgebildeten Rastiervorrichtung ausgerüstete Handbremsventileinrichtung bedingt jedoch eine
von den üblichen Handbremsventileinrichtungen abweichende
Bedienung, wodurch besondere Unfallgefahren durch Falschbedienungen bedingt sind, außerdem ist auch hier möglich,
durch mangelhafte und unvollständige Bedienung eine die
Gefahr eines selbsttätigen Lösens beinhaltende "Zahn-auf-
Zahn-Stellung" einzustellen.

- 3a -

Bei druckluftgebremsten Kraftfahrzeugen ist es bekannt, eine in Abhängigkeit von der Höhe des Bremszylinderdruckes schaltende Überwachvorrichtung vorzusehen: Unmittelbar am Bremszylinder-Druckluftanschluß oder am Boden des Bremszylinders befindet sich ein Druckschalter, der bei direkt wirkenden Bremszylindern bei Erreichen einer bestimmten, ein sicheres Bremsen bewirkenden Bremsdruckhöhe, bei beispielsweise als Federspeicherzylinder ausgebildeten, indirekt wirkenden Bremszylindern dagegen bei Entlüftung des Federspeicherzylinders kurz vor Erreichen des vollständigen Druckabbaues schaltet und über ein Schauzeichen dem Fahrzeugführer das Erreichen des zur Bremsung ausreichenden Druck- bzw. Entlüftungszustandes im Brems- bzw. Federspeicherzylinder signalisiert. Es ist auch bereits bekannt, anstelle des Druckschalters einen in der Kolbenstange des Bremszylinders bzw. Federspeicherzylinders angeordneten, in Abhängigkeit von der Kolbenstangenbelastung schaltenden Schalter zum Schalten des Schauzeichens vorzusehen.

Insbesondere für hand- oder fußbetätigbare Handbrems- bzw. Feststellbremseinrichtungen für Personenkraftfahrzeuge ist es bekannt, im Armaturenbrett als Kontrolllampen ausgebildete Schauzeichen vorzusehen, welche beim Betätigen der

- 4 -

Handbrems- bzw. Feststellbremse schalten und diese Bremsbetätigung somit optisch anzeigen. Die erwähnten Handbrems- bzw. Feststellbremseinrichtungen sind mit ratschenartigen Rastiereinrichtungen versehen, welche das Betätigungsglied, also den Handbremshebel bzw. das Feststellbremspedal, in den Bremsstellungen selbsttätig und nur willkürlich lösbar rastieren. Die erwähnten, bekannten Schauzeichen sind nicht in der Lage, das Einrasten dieser Rastierungen anzuzeigen; es ist bekannt, daß auch bei diesen Rastierungen "Zahn-auf-Zahn-Stellungen" möglich sind, wodurch die Gefahr eines selbsttätigen, zumindest teilweisen Lösens der Handbrems- bzw. Feststellbremseinrichtung beispielsweise bei Fahrzeugerschütterungen gegeben ist.

Es ist Aufgabe der Erfindung, eine Handbremseinrichtung für Fahrzeuge der eingangs genannten Art derart auszugestalten, daß die vollständige und ordnungsgemäße Einstellung der Parkbremsstellung überprüfbar ist, daß eine "Zahn-auf-Zahn-Stellung" der Rastiervorrichtung also erkennbar und somit durch nochmalige Betätigung beseitigbar und somit ein ungewolltes Lösen der Fahrzeugbremsen ausschließbar ist.

Diese Aufgabe wird nach der Erfindung dadurch gelöst, daß ein vom Rastglied nur in dessen Raststellung betätigbares Kontrollzeichen vorgesehen ist. Das Kontrollzeichen schaltet somit nur, falls das Rastglied vollständig in seine Raststellung gelangt und die Rastierung somit das Betätigungsglied sicher in seiner Park- bzw. Feststellbremsstellung festhält; die vollständige Parkbrems- bzw. Feststellbremseinstellung ist somit mittels des Kontrollzeichens überprüfbar.

Falls das Kraftfahrzeug mit einer Handbremsventileinrichtung mit Einstellmöglichkeit einer Prüfstellung, also

- 5 -

beispielsweise gemäß den eingangs erwähnten Druckschriften ausgebildet ist, ist es nach der weiteren Erfindung zweckmäßig, wenn das Kontrollzeichen ausschließlich in der der Parkbremsstellung entsprechenden Raststellung des Rastgliedes betätigbar ist. Hierdurch wird erreicht, daß das Kontrollzeichen zusätzlich zum vollständigen Einrastens des Rastgliedes auch die Einstellung der Parkbremsstellung überwacht, es am Kontrollzeichen also erkennbar ist, ob der Handgriff der Handbremsventileinrichtung nach einer Einstellung der Prüfstellung fälschlich in dieser verbleibt.

Den Merkmalen der weiteren Unteransprüche sind weitere, vorteilhafte Ausgestaltungsmöglichkeiten der Hand- bzw. Feststellbremseinrichtung entnehmbar. Dabei ergibt sich bei einer in der Park- bzw. Feststellbremsstellung einen Federspeicherzylinder entlüftenden Handbremsventileinrichtung durch eine besonders zweckmäßige Ausbildung nach Unteranspruch 11, daß sowohl bei mangelhafter Handbremsventileinstellung, bei nicht voll einrastendem Rastglied und auch bei durch irgendwelche andere Fehler bedingtem Nichtansprechen des Federspeicherzylinders in der Park- bzw. Feststellbremsstellung das Kontrollzeichen ein Alarmzeichen abgibt und die Aufmerksamkeit des Fahrzeugführers erweckt.

In den Zeichnungen sind unterschiedliche Ausführungsbeispiele für nach der Erfindung ausgebildete Handbremseinrichtungen in den hier wesentlichen Teilen dargestellt und zwar zeigt:

Figur 1      einen Teilschnitt durch eine Handbremsventileinrichtung,

Figur 2      eine Aufsicht auf die Schaltkulisse der Handbremsventileinrichtung nach Fig. 1,

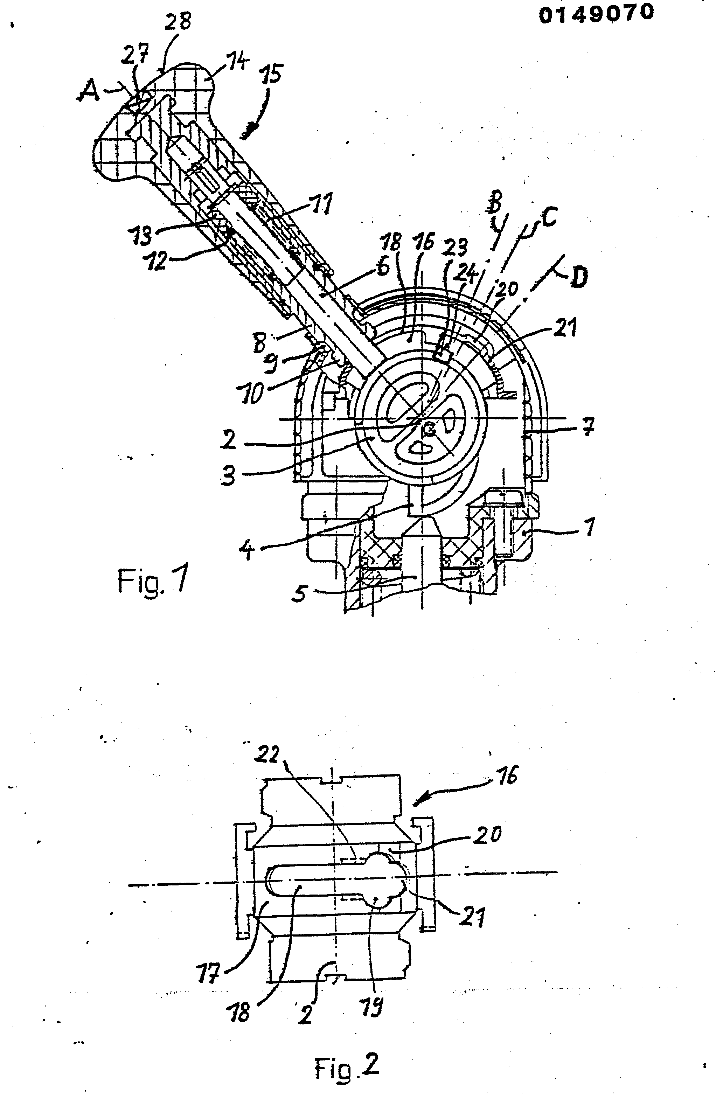

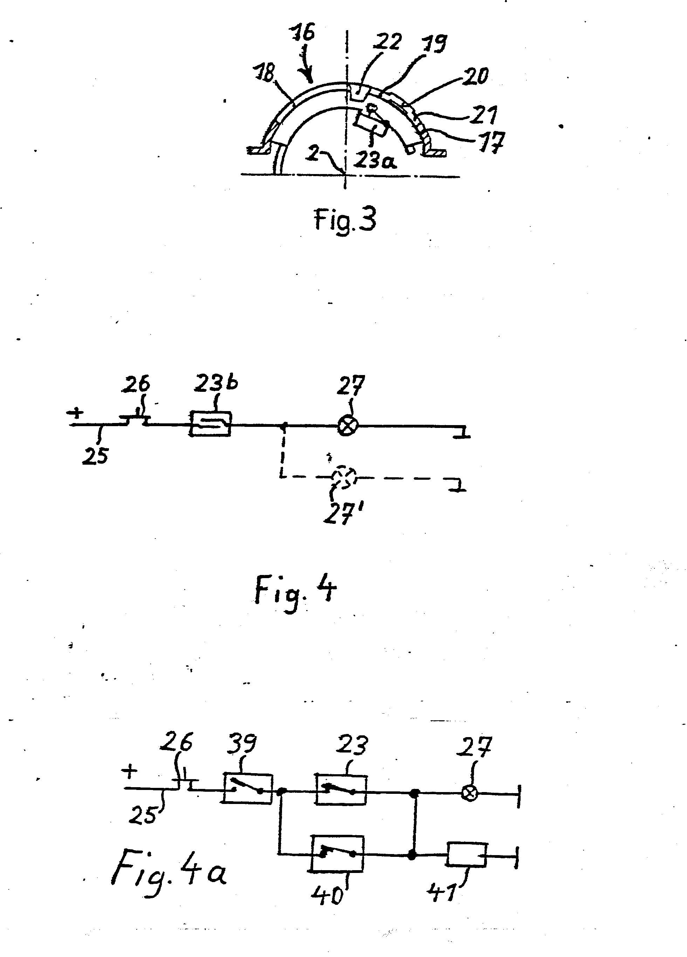

Figur 3      eine Schnittansicht der Schaltkulisse nach Fig. 1 und 2 mit einer abgewandelten Schaltvorrichtung für das Kontrollzeichen,

wobei die Handbremsventileinrichtung nach Fig. 1 mit den Schaltkulissen nach Fig. 2 und 3 insbesondere für im übrigen entsprechend der bereics erwähnten DE-OS 29 53 606 ausgebildete Handbremsventile verwendbar ist.

Figur 4 und 4a        Schaltschema des Kontrollzeichens,

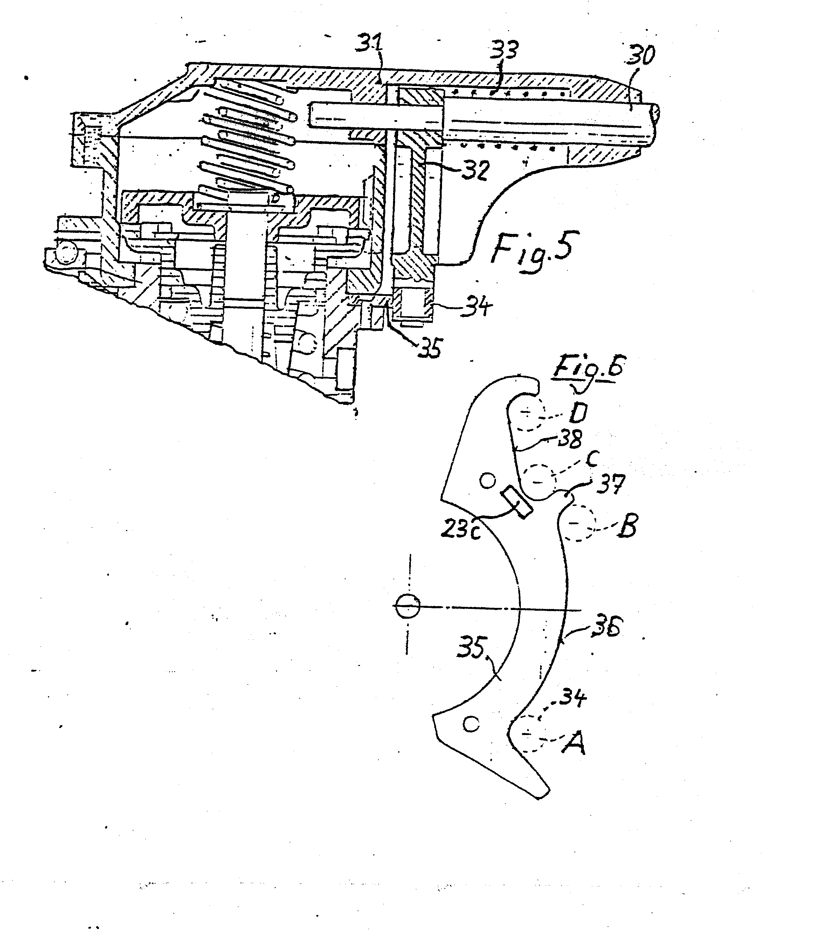

Figur 5               einen Teilschnitt durch eine Handbremsventileinrichtung beispielsweise
                      gemäß der ebenfalls bereits erwähnten
                      DE-AS 24 35 243, und

Figur 6               die Schaltkulisse der Handbremsventileinrichtung nach Fig. 5 mit unter-
                      schiedlichen Stellungen des Rast-
                      gliedes in Aufsicht.

Die Handbremsventileinrichtung gemäß Fig. 1 weist in einem Gehäuse 1 eine um eine Drehachse 2 drehbar gelagerte Exzenterscheibe 3 auf, deren Nocken 4 mit einem nur teilweise dargestellten Ventilstößel 5 zu dessen axialer Verstellung zusammenwirkt. Die Exzenterscheibe 3 ist drehfest mit einem zur Drehachse 2 radial auskragenden Stift 6 verbunden, der Stift 6 überragt eine mit dem Gehäuse 1 verbundene Abdeckkappe 7 der Handbremsventileinrichtung. Auf dem Stift 6 ist axialverschieblich eine Hülse 8 gelagert, welche die Abdeckkappe 7 durchragt und innerhalb der Abdeckkappe 7 mit einem durch eine Ringnut 9 abgegrenzten Rastglied 10 endet. In einem zwischen der Hülse 8 und dem Stift 6 vorgesehenen Ringraum 11 befindet sich eine Feder 12, welche am der Drehachse 2 entfernteren Ende an einem mit dem Stift 6 verbundenen Ringflansch 13 abgestützt ist und andererseits an einer Schulterfläche der Hülse 8 anliegt, derart, daß die Hülse 8 in Verschieberichtung auf dem Stift 6 zur Drehachse 2 hin belastet ist. Die Hülse 8 ist fest mit einem auf dem Außenumfang des Ringflansches 13 verschieblich gelagerten, den Stift 6 überragenden Griffteil 14 verbunden; der Griffteil 14 und die Hülse 8 stellen einen Handgriff 15 dar, mittels welchem die Exzenterscheibe 3 willkürlich drehbar ist und zudem das Rastglied 10 auf dem Stift 6 willkürlich axialverschieblich ist. Das Rastglied 10 wirkt mit einer Schaltkulisse 16 zusammen, deren Gestalt aus Fig. 2 und 3 ersichtlich ist.

Die Schaltkulisse 16 weist gemäß Fig. 2 und 3 einen bogenartig um die Drehachse 2 gekrümmten Abschnitt 17 auf, welcher mit einem Längsschlitz 18 versehen ist, durch welchen der Stift 6 greift. Die Weite des Längsschlitzes 18 erreicht in einem Schwenkbereich des Handgriffes 15 von der in Fig. 1 dargestellten Lösestellung A bis zu einer maximalen Bremsstellung B, welche in Fig. 1 lediglich durch die Achse des Handgriffes 15 angedeutet ist, dem Durchmesser des Stiftes 6, so daß das Rastglied 10 bei dieser Schwenkbewegung unter der Kraft der Feder 12 auf dem Abschnitt 17 entlanggleitet. Anschließend an die Bremsstellung B weist in einer Park- bzw. Feststellbremsstellung C der Längsschlitz 18 eine Erweiterung 19 auf, welche zum Durchtritt des Rastgliedes 10 ausreicht. An der Schaltkulisse 16 vorgesehene, in den Schwenkbereich oberhalb des Abschnittes 17 ragende Lappen 20 schließen ein Überreißen der Park- bzw. Feststellbremsstellung C mit auf dem Abschnitt 17 weitergleitendem Rastglied 10 aus. Gelangt der Handgriff 15 also in die Park- bzw. Feststellbremsstellung C, so verschiebt die Feder 12 die Hülse 8 axial auf dem Stift 6, derart, daß das Rastglied 10 durch die Erweiterung 19 hindurchtritt und unter den Abschnitt 17 gelangt. Im Anschluß an die Erweiterung 19 befindet sich noch ein kurzer Längsschlitzabschnitt 21, welcher ein Weiterbewegen des Handgriffes 15 aus der Park- bzw. Feststellbremsstellung C in eine Prüfstellung D ermöglicht, wobei das Rastglied 10 im Schwenkbereich zwischen der Park- bzw. Feststellbremsstellung C und der Prüfstellung D unterhalb des Abschnittes 17 entlanggleitet. Weiterhin befinden sich an der Schaltkulisse 16 seitlich des Längs-

8

schlitzes 18 radial nach innen auskragende Anschläge 22, welche ein Zurückdrehen des Handgriffes 15 aus der Park- bzw. Feststellbremsstellung C mit unterhalb des Abschnittes 17 befindlichem Rastglied 10 ausschließen; erst nach manuellem Ziehen am Handgriff 15, wodurch dieser auf dem Stift 6 entgegen der Kraft der Feder 12 zur Drehachse 2 radial nach außen gleitet und wodurch ein Hindurchtreten des Rastgliedes 10 durch die Erweiterung 19 bewirkt wird, kann der Handgriff 15 mit außen auf dem Abschnitt 17 entlang gleitendem Rastglied 10 wieder in die Bremsstellung B und weiter bis zur Lösestellung A bewegt werden. Des weiteren kann in nicht dargestellter Weise an der Schaltkulisse 10 eine nicht dargestellte, im Bereich der Bremsstellung B mit dem Rastglied 10 in Eingriff gelangende, nach radial außen gerichtete Erhebung vorgesehen sein, auf welche beim Bewegen des Handgriffes 15 von der Bremsstellung B zur Park- bzw. Festbremsstellung C das Rastglied 10 federnd aufläuft und welche somit als gegen Federkraft zu überwindender Anschlag beim Verschwenken des Handhebels 15 aus der Bremsstellung B in die Park- bzw. Feststellbremsstellung C wirkt; ein derartiger, federnder Anschlag ermöglicht dem Fahrzeugführer, das Erreichen der Bremsstellung B zu erfühlen.

Insoweit entspricht die Handbremsventileinrichtung derjenigen nach der DE-OS 29 53 606, auch die in Fig. 1 weggelassenen Teile der Handbremsventileinrichtung können der genannten Druckschrift entsprechen, sie sind somit bekannt und müssen somit wieder in ihrem Aufbau noch in ihrer Funktion weiter beschrieben werden, zumal sie für die vorliegende Erfindung unwesentlich sind.

Am Gehäuse 1 bzw. der mit diesem verbundenen Schaltkulisse 16 ist gemäß Fig. 1 als elektrische Schaltvorrichtung ein Stößelschalter 23 angeordnet, derart, daß sein Schaltstößel 24 in die Bewegungsbahn des Rastgliedes 10 zu Ende des Durchtrittes durch die Erweiterung 19 nach radial innen ragt und der Stößelschalter 23 somit bei unterhalb des Abschnittes 17 befindlichem Rastglied 10 und in der Park- bzw. Festbremsstellung C befindlichem Handgriff 15 durch Eindrücken des Schaltstößels 24 geschlossen ist. Beim Weiterbewegen des Handgriffes 15 in die Prüfstellung D wird der Schaltstößel 24 durch Abgleiten des Rastgliedes 10 wieder frei und der Stößelschalter 23 öffnet, beim Zurückbewegen des Handgriffes 15 in die Park- bzw. Feststellbremsstellung C gleitet das Rastglied 10 wieder auf den Schaltstößel 24 auf und schließt hierdurch den Stößelschalter 23 erneut. Beim Herausziehen des Handgriffes 15, um, wie vorstehend beschrieben, ein nach radial außen gerichtetes Hindurchtreten des Rastgliedes 10 durch die Erweiterung 19 zu bewirken, öffnet der Stößelschalter 23 wieder. Im Ergebnis ist der Stößelschalter 23 also nur geschlossen, wenn das Rastglied 10 sich bei in der Park- bzw. Feststellbremsstellung C befindlichem Handgriff 15 radial innerhalb der Schaltkulisse 16, also vollständig in seiner Raststellung befindet, in welcher das Rastglied 10 im Zusammenwirken mit den Anschlägen 22 ein ungewolltes Zurückdrehen des Handgriffes 15 in Richtung zur Bremsstellung B und Lösestellung A ausschließt.

Anstelle des Stößelschalters 23 kann selbstverständlich auch eine andere, geeignete Schaltvorrichtung vorgesehen sein: Gemäß Fig. 3 ist beispielsweise an der Schaltkulisse 16 ein Rollenhebelschalter 23a angeordnet, dessen Schaltfunktion jedoch derjenigen des Stößelschalters 23 nach Fig. 1 vollständig entspricht. Besonders vorteilhaft sind auch berührungsfrei schaltende Schaltvorrichtungen verwendbar; insbesondere kann, wie in Fig. 4 angedeutet, ein Reedkontakt 23b vorgesehen sein, wobei lediglich das vorstehend für den Stößelschalter 23 beschriebene Schaltverhalten sicherzustellen ist. Auch optische Fotodioden aufweisende Schaltvorrichtungen sind verwendbar.

Der den Stößelschalter 23, den Rollenschalter 23a oder den Reedkontakt 23b aufweisende Stromkreis entspricht dem in Fig. 4 dargestellten Schaltungsprinzip. Von einer nicht dargestellten Stromquelle führt ein Kabel 25 über einen bei Inbetriebnahme des Fahrzeuges zu schließenden Schalter 26, beispielsweise den Zündschloßschalter oder ein entsprechendes Schaltorgan, zum Reedkontakt 23b und von diesem über ein als Kontrollampe 27 ausgebildetes Kontrollzeichen zur Stromquelle zurück. Die Kontrollampe 27 kann im Armaturenbrett des Fahrzeuges angeordnet sein, es ist jedoch besonders zweckmäßig, sie, wie in Fig. 1 angedeutet, in die freie Stirnfläche 28 des Handbremshebels 15 einzulassen. Selbstverständlich ist es auch möglich, mehrere Kontrollampen vorzusehen, wobei eine Kontrollampe 27 sich wie beschrieben am Handgriff 15 und eine weitere, zu dieser wie in Fig. 4 gestrichelt angedeutet parallel geschaltete Kontrollampe 27' im Armaturenbrett befindet.

Aus dem zum Stößelschalter 23 beschriebenen Schaltverhalten ergibt sich ohne weiteres, daß bei geschlossenem Schalter 26 und damit in Betrieb befindlichem Fahrzeug die Kontrollampe 27 und gegebenenfalls 27' nur aufleuchtet, wenn bei in Park- bzw. Feststellbremsstellung C befindlichem Handhebel 15 das Rastglied 10 sich vollständig in seiner Raststellung befindet. Dem Fahrzeugführer wird somit die vollständige Rastierung des Handhebels 15 in der Park- bzw. Feststellbremsstellung C durch Aufleuchten der Kontrollampe 27, 27' signalisiert. Sollte der Handhebel 15 nur flüchtig bzw. unvollständig in die Park- bzw. Feststellbremsstellung C eingestellt werden, wobei das Rastglied 10 nur etwas in die Erweiterung 19 eintreten, nicht aber durch diese hindurchtreten kann, die Rastierung also eine Stellung ähnlich der bekannten "Zahn-auf-Zahn-Stellung"

leinnimmt, so bleibt die Kontrollampe 27, 27' dunkel und zeigt dem Fahrzeugführer die unvollständige Rastierung des Handhebels 15 an. Durch entsprechende Betätigung des Handhebels 15 kann der Fahrzeugführer sodann eine vollständige Rastierung des Handhebels 15 in der Park- bzw. Feststellbremsstellung bewirken. Der Erfolg dieser Maßnahme wird ihm durch Aufleuchten der Kontrollampe 27, 27' angezeigt. Es ist somit stets ein sicheres, kontrollierbares Einstellen der Park- bzw. Feststellbremsstellung C möglich, wodurch ein unbeabsichtigtes Abrollen des Fahrzeuges ausgeschlossen wird.

Selbstverständlich können anstelle der Kontrollampen 27, 27' andersartige Kontrollzeichen, beispielsweise akustische Signalgeber, vorgesehen sein. Es ist besonders zweckmäßig, im Handgriff 15 eine Kontrollampe 27 und an anderer Stelle statt der Kontrollampe 27' einen akustischen Signalgeber, beispielsweise Summer, anzuordnen.

In Abwandlung der vorstehend beschriebenen Ausführungsform kann es insbesondere bei Verwendung eines akustischen Signalgebers zweckmäßig sein, eine Schaltung vorzusehen, bei welcher der Signalgeber nicht, wie bei der vorstehenden Ausführungsform beschrieben, ein Signal bei in Park- bzw. Feststellbremsstellung C befindlichem Handgriff 15 und vollständig eingerastetem Rastglied 10, sondern bei in Park- bzw. Feststellbremsstellung C befindlichem Handgriff 15 und nicht vollständig eingerastetem Rastglied 10 abgibt. Im Gegensatz zur ersterwähnten, eine ordnungsgemäße Funktion signalisierenden Ausführung gibt die zweiterwähnte Ausführung ein Warnsignal nur bei nicht ordnungsgemäßer Funktion ab, wodurch der Fahrzeugführer besonders auf die Fehlfunktion hingewiesen wird. Der gesonderte Hinweis auf die Fehlfunktion steigert die Sicherheit für das Erkennen dieser Fehlfunktion, während die Anzeige der korrekten Funktion eine vergeßbare Aufmerksamkeit des Fahrzeugführers erfordert.

Zum Realisieren der zweiterwähnten Ausführung kann eine vom Handhebel 15 stets bei dessen Einstellung in die Park- bzw. Feststellbremseinrichtung C zu schließende, nicht dargestellte, zweite Schaltvorrichtung vorgesehen sein, die in Serie zur als Unterbrecher auszubildenden, vom Rastglied 10 nur in dessen vollständiger Raststellung öffnenden Schaltvorrichtung- die also den Schaltvorrichtungen Stößelschalter 23, Rollenschalter 23a oder Reedkontakt 23b entspricht, jedoch entgegengesetztes Schaltverhalten aufweist - in den Erregungsstromkreis des Signalgebers eingeschaltet ist. Es ergibt sich dann bei Einstellen des Handgriffes 15 in die Park- bzw. Feststellbremsstellung C ein kurzzeitiges Ansprechen des Signalgebers, wodurch dessen ordnungsgemäße Funktion signalisiert wird. Anschließend, beim vollständigen Einrasten des Rastgliedes 10, erlischt der Signalgeber wieder und zeigt somit das volle Einrasten an. Sollte das Rastglied 10 jedoch nicht vollständig einrasten, so erlischt der Signalgeber nicht, er gibt vielmehr ein andauerndes Warnsignal ab, welches die Aufmerksamkeit des Fahrzeugführers erweckt. Erst bei vom Fahrzeugführer durch nochmalige Handgriffbetätigung zu bewirkendem, vollständigem Einrasten des Rastgliedes 10 erlischt das vom Signalgeber abgegebene Warnsignal.

Falls die Handbremsventileinrichtung in der Park- bzw. Feststellbremsstellung C wie allgemein üblich einen durch Druckluft spannbaren Federspeicherzylinder entlüftet, kann die vorstehend erläuterte Ausführung durch Ergänzen mit einer weiteren, dritten Schaltvorrichtung in einfacher Weise derart weiter ausgebildet werden, daß der Signalgeber zusätzlich immer dann, wenn in der Park- bzw. Feststellbremsstellung C der Federspeicherzylinder durch irgendwelche Mängel bedingt nicht ordnungsgemäß anspricht, ein Warnsignal abgibt; in Fig. 4a ist ein hierzu geeignetes Schaltschema dargestellt.

Gemäß Fig. 4a führt von einer nicht dargestellten Stromquelle ein Kabel 25 über den bei Inbetriebnahme des Fahrzeuges zu schließenden Schalter 26 zu der bereits erläuterten, zweiten Schaltvorrichtung 39, die andererseits mit der ersten Schaltvorrichtung 23 und, parallel hierzu, einer weiteren, dritten Schaltvorrichtung 40 in Verbindung steht. Die erste und dritte Schaltvorrichtung 23 und 40 sind ausgangsseitig miteinander und mit dem Kontrollzeichen, als Kontrollampe 27 und Summer 41 dargestellt, verbunden. Sowohl die erste und dritte Schaltvorrichtung 23 und 40 als auch die Kontrollampe 27 und der Summer 41 sind also zueinander parallel geschaltet. Die beiden Schaltvorrichtungen 23 und 39 können in beliebiger, geeigneter Weise, wie vorstehend bereits erläutert, ausgebildet sein. Die dritte Schaltvorrichtung 40 ist zweckmäßig als Druckwächter oder in Art einer Kraftmeßdose auszubilden. Die erste Schaltvorrichtung 23 öffnet wie zu vorstehend beschriebener Ausführungsform erläutert nur bei vollständigem Einrasten des Rastgliedes 10 und ist ansonsten geschlossen. Die zweite Schaltvorrichtung 39 schließt bei Einstellen des Handgriffes 15 in die Park- bzw. Feststellbremsstellung C, wie ebenfalls bereits beschrieben wurde. Die dritte Schaltvorrichtung 40 öffnet, wenn der Federspeicherzylinder ausreichend entlüftet ist, sein pneumatischer Spanndruck also annähernd auf Atmosphärendruck abgebaut ist,oder wenn die Kolbenstange des Federspeicherzylinders für eine Bremsung ausreichend kräftig belastet ist. Die dritte Schaltvorrichtung 40 kann auch an einer Lagerstelle des Bremsgestänges angeordnet sein und in Abhängigkeit von deren Bremsen-Zuspannkraftbelastung schalten, wie es aus der DE-PS 1 078 158 prinzipiell bekannt ist; bei dieser Anordnung wird die Funktion des Bremsgestänges mitüberwacht.

Aus Fig. 4a ist ableitbar, daß die Kontrollzeichen, die Kontrollampe 27 und der Summer 41, nicht nur wie nach der

0149070

14

zuvor beschriebenen Ausführungsform beim Einstellen des Handgriffs 15 in die Park- bzw. Feststellbremsstellung C ein kurzes Prüfzeichen abgeben, das sodann beim vollen Einrasten des Rastgliedes 10 wieder erlischt bzw. beim mangelhaften Einrasten als Warnsignal bestehen bleibt, sondern daß zusätzlich das Prüfzeichen als Warnsignal bestehen bleibt, falls der Federspeicherzylinder nicht ausreichend entlüftet wird und/oder keine ausreichende Bremsen-Zuspannkraft mit entsprechender Kolbenstangen- bzw. Bremsgestängebelastung abgibt. Nur dann, wenn auch die letzterwähnten Bedingungen funktionsrichtig erfüllt sind, zeigt das Erlöschen des Prüfsignals das volle Einrasten des Handbremshebels in die Park- bzw. Feststellbremsstellung C und den ordnungsgemäß erfolgten Bremskraftaufbau an; das Fahrzeug ist also sicher eingebremst und kann verlassen werden.

Es sind viele schaltungsmäßige Abänderungen möglich, beispielsweise kann in den dargestellten Stromkreisen der Schalter 26 entfallen, damit bei dessen vorzeitigem Öffnen das Warnsignal nicht ausfällt. Auch ist es möglich, die Schaltungen nach Fig. 4 und 4a zu kombinieren, beispielsweise durch Ausstatten der ersten Schaltvorrichtung 23 nach Fig. 4a mit einem entgegengesetzt schaltenden Schaltkontakt, zum Überwachen einer das Einrasten des Rastgliedes positiv anzeigenden Kontrollampe entsprechend Fig. 4.

In weiterer Abänderung ist es möglich, die erste Schaltvorrichtung, also die Schalter 23, 23a und 23b, derart auszubilden, daß sie nicht nur in der Park- bzw. Feststellbremsstellung C, sondern auch in der Prüfstellung D betätigbar ist. Das Kontrollzeichen vermag dann nicht zwischen diesen beiden Stellungen zu unterscheiden.

Die dritte Schaltvorrichtung 40 kann, evtl. nach entsprechender Anpassung ihres Schaltverhaltens, auch bei unter Druckaufbau ein Einbremsen bewirkenden, dann verriegelbaren Bremszylindern verwendet werden.

- 15 -

Die Figur 5 zeigt eine andersartige Handbremseinrichtung entsprechend der bereits eingangs erwähnten DE-AS 24 35 234. Der nicht dargestellte Handgriff ist hierbei mit einer Stange 30 verbunden, welche längsverschieblich in einem um eine zur Längsrichtung der Stange 30 senkrechte Drehachse drehbaren Deckelteil 31 geführt ist. Innerhalb des Deckelteiles 31 ist die Stange 30 mit einem auskragenden Arm 32 verbunden. Eine Feder 33 belastet den Arm 32 und die Stange 30 in Verschieberichtung in das Deckelteil 31 hinein. Das Ende des Armes 32 trägt ein als Rolle 34 ausgebildetes Rastglied, welches auf einer Schaltkulisse 35 abrollbar ist. Die in Fig. 6 als Einzelteil in Aufsicht dargestellte Schaltkulisse 35 weist eine erste Kulissenbahn 36 auf, auf welcher die Rolle 34 beim Drehen des Handhebels in einer Horizontalebene im Bereich zwischen der Lösestellung A und der Bremsstellung B abrollt; die Rolle 34 ist in Fig. 6 in ihren verschiedenen Stellungen gestrichelt angedeutet. Im Anschluß an die Kulissenbahn 36 weist die Schaltkulisse 35 einen beim Weiterbewegen des Handgriffes von der Rolle 34 unter Kompression der Feder 33 überwindbaren Nocken 37 auf, an welchen sich eine zweite, tiefer liegende Kulissenbahn 38 anschließt. In der Kulissenbahn 38 schließt sich an den Nocken 37 die Park- bzw. Feststellbremsstellung C an, andererseits endet die Kulissenbahn 38 mit der Prüfstellung D. Seitens der Kulissenbahn 38 weist der Nocken 37 eine steile, nur durch willkürliches Herausziehen der Stange 30 aus dem Deckelteil 31 entgegen der Kraft der Feder 33 überwindbare Flanke auf; bei am Grund der Kulissenbahn 38 anliegender Rolle 34 ist also die Handbremseinrichtung in ihrer Park- bzw. Feststellbremsstellung C eingerastet und vermag sich nicht ungewollt bzw. selbsttätig aus dieser Schaltstellung in Richtung zur Bremsstellung B bzw. Lösestellung A zu verstellen. Insoweit entspricht die Handbremseinrichtung auch in ihrem übrigen, hier nicht beschriebenen bzw. dargestellten Aufbau sowie in ihrer Funktionsweise derjenigen nach der DE-AS 24 35 243.

Gemäß Fig. 6 trägt die Schaltkulisse 35 im Übergangsbereich von der Kulissenbahn 38 zum Nocken 37 eine elektrische Schaltvorrichtung 23c, welche nur bei vollständig in der Park- bzw. Feststellbremsstellung C eingerasteter Rolle 34 von dieser Rolle 34 berührungsfrei schaltbar ist; zweckmäßig kann die Schaltvorrichtung 23c als kontaktlose Schaltvorrichtung ausgebildet sein. Zum Beeinflußen der Schaltvorrichtung 23c kann die Rolle 34 das Magnetfeld in ihrer Umgebung ändernd, also beispielsweise entsprechend metallisch oder magnetisch, ausgebildet sein. Die Schaltvorrichtung 23c ist in einen Stromkreis entsprechend Fig. 4 oder 4a zum Schalten von das Einrasten der Rolle 34 anzeigenden Kontrollzeichen 27, 27', 41 eingeordnet. Die Funktionsweise entspricht somit den zuvor beschriebenen Anordnungen und braucht daher hier nicht wiederholt zu werden.

Die bei vollständigem Einrasten des Rastgliedes 10 bzw. der Rolle 34 in der Park- bzw. Feststellbremsstellung C schaltbare Schaltvorrichtung kann in beliebiger Weise ausgebildet sein, es ist zweckmäßig, diese Schaltvorrichtung berührungsfrei schaltend in Art eines Näherungsschalters auszubilden. Die Schaltvorrichtung muß nicht eine elektrische oder optische Schaltvorrichtung sein, es kann auch eine pneumatische Schaltvorrichtung in Art eines üblichen, pneumatischen Näherungsschalters oder eines Schaltventils verwendet werden, welches ein pneumatisch ansteuerbares, übliches Kontrollzeichen anstelle der Kontrollampen 27, 27' ansteuert.

Weiterhin ist es selbstverständlich auch möglich, das ganze Kontrollzeichen anders als elektrisch oder pneumatisch wirkend auszubilden, es kann mechanisch, hydraulisch,mittels Lichtleitern optisch oder in sonstiger Art wirkend ausgebildet sein.

Es ist erwähnenswert, daß das Kontrollzeichen besonders gut auch zur nachträglichen Ausrüstung bereits vorhandener Hand- und Feststellbremseinrichtungen geeignet ist. Bei den Ausführungsbeispielen nach Fig. 1 bis 6 bereitet beispielsweise weder eine nachträgliche Anordnung der Schalter 23, 23a, 23b, 23c noch der Kontrollampen 27, 27' oder der akustische Signalgeber 41 Schwierigkeiten. Auch die Anordnung der erwähnten zweiten und dritten Schaltvorrichtungen 39 und 40 ist ohne weiteres möglich.

Bei Fahrzeugen mit Hand- bzw. Feststellbremseinrichtungen mit ratschenartigen Rastierungsvorrichtungen ist das Schauzeichen zweckmäßig in Abhängigkeit von der Lage der Ratschenklinke schaltbar anzuordnen, auch hierbei ist eine Überwachung des vollständigen Einrastens der Hand- bzw. Feststellbremseinrichtung gegebenenfalls in Kombination mit einer Überwachung der Bremsen-Zuspannkraft entsprechend den vorstehend beschriebenen Anordnungen möglich und zweckmäßig.

Kurzfassung:

Die Handbrems- bzw. Feststellbremseinrichtung für Fahrzeuge mit einem in einen Park- bzw. Feststellbremsstellung C mittels eines Rastgliedes 10 verrastbaren Handgriff 15 weist eine Überwachvorrichtung auf, welche das vollständige Einrasten des Rastgliedes 10 überwacht. Nur bei vollständig eingerastetem Rastglied 10 wird eine Schaltvorrichtung 23 zum Betätigen eines optischen oder akustischen Kontrollzeichens 27 eingeschaltet. Es kann zusätzlich die Entwicklung der Bremsen-Zuspannkraft überwacht werden, derart, daß diese Betätigung des Kontrollzeichens 27 mitüberwacht.

Knorr-Bremse GmbH          München, den 15 .12.1983

Moosacher Str. 80          TP-ma

D-8000 München 40          1770

Bezugszeichenliste

| | | | | | |
|---|---|---|---|---|---|
| 1 | = | Gehäuse | 27 | = | Kontrollampe |
| 2 | = | Drehachse | 27' | = | Kontrollampe |
| 3 | = | Exzenterscheibe | 28 | = | Stirnfläche |
| 4 | = | Nocken | 30 | = | Stange |
| 5 | = | Ventilstößel | 31 | = | Deckelteil |
| 6 | = | Stift | 32 | = | Arm |
| 7 | = | Abdeckklappe | 33 | = | Feder |
| 8 | = | Hülse | 34 | = | Rolle |
| 9 | = | Ringnut | 35 | = | Schaltkulisse |
| 10 | = | Rastglied | 36 | = | Kulissenbahn |
| 11 | = | Ringraum | 37 | = | Nocken |
| 12 | = | Feder | 38 | = | Kulissenbahn |
| 13 | = | Ringflansch | 39 | = | 2. Schaltvorrichtung |
| 14 | = | Griffteil | 40 | = | 3. Schaltvorrichtung |
| 15 | = | Handgriff | 41 | = | Summer |
| 16 | = | Schaltkulisse | | | |
| 17 | = | Abschnitt | A | = | Lösestellung |
| 18 | = | Längsschlitz | B | = | Bremsstellung |
| 19 | = | Erweiterung | C | = | Park- bzw. Feststell-bremsung |
| 20 | = | Lappen | | | |
| 21 | = | Längsschlitzabschnitt | D | = | Prüfstellung |
| 22 | = | Anschläge | | | |
| 23 | = | Stößelschalter, erste Schaltvorrichtung | | | |
| 23a | = | Rollenhebelschalter | | | |
| 23b | = | Reedkontakt | | | |
| 23c | = | Schaltvorrichtung | | | |
| 24 | = | Schaltstößel | | | |
| 25 | = | Kabel | | | |
| 26 | = | Schalter | | | |

Knorr-Bremse GmbH
Moosacher Str. 80
8000 München 40

München, den 15.12.1983
TP-fe
1770

P a t e n t a n s p r ü c h e

1. Hand- bzw. Feststellbremseinrichtung für Fahrzeuge, insbesondere Handbremsventileinrichtung für druckluftgebremste Kraftfahrzeuge, mit einem Betätigungsglied (15, 30), das in einer Park- bzw. Feststellbremsstellung (C) mittels eines in eine Raststellung bewegbaren Rastgliedes (10, 34) einrastbar ist, dadurch gekennzeichnet, daß ein vom Rastglied (10, 34) nur in dessen Raststellung betätigbares Kontrollzeichen (27, 27') vorgesehen ist.

2. Handbremsventileinrichtung nach Anspruch 1, wobei das Betätigungsglied (15, 30) bei in Raststellung befindlichem Rastglied (10, 34) unter begrenzter Bewegung des Rastgliedes aus der Park- bzw. Feststellbremsstellung (C) in eine an diese anschließende Prüfstellung (B) bewegbar ist, dadurch gekennzeichnet, daß das Kontrollzeichen (27, 27') ausschließlich in der der Park- bzw. Feststellbremsstellung (C) entsprechenden Raststellung des Rastgliedes (10, 34) betätigbar ist.

3. Hand- bzw. Feststellbremseinrichtung nach Anspruch 1 oder 2, dadurch gekennzeichnet, daß das Kontrollzeichen (27, 27') eine vom Rastglied (10, 34) mechanisch oder berührungsfrei schaltbare, elektrische Schaltvorrichtung (23, 23a, 23b, 23c) und wenigstens eine von dieser überwachte Kontrollampe (27, 27') und/oder akustischen Signalgeber (41) umfaßt.

- 2 -

2

4. Hand- bzw. Feststellbremseinrichtung nach Anspruch 3, dadurch gekennzeichnet, daß die Kontrollampe (27) sich am Betätigungsglied (15) befindet.

5. Hand- bzw. Feststellbremseinrichtung nach Anspruch 4, dadurch gekennzeichnet, daß die Kontrollampe (27) in die freie Stirnfläche (28) des als Handbremshebel (15) ausge- bildeten Betätigungsorgans eingelassen angeordnet ist.

6. Hand- bzw. Feststellbremseinrichtung nach Anspruch 3, 4 oder 5, dadurch gekennzeichnet, daß die gegebenenfalls zweite Kontrollampe (27') und/oder der akustische Signalgeber (41) sich im Armaturenbrett des Fahrzeuges befindet.

7. Hand- bzw. Feststellbremseinrichtung nach Anspruch 3, wobei das Rastglied (10, 34) an einer Schaltkulisse (16, 35) geführt ist, dadurch gekennzeichnet, daß die Schaltvorrichtung (23, 23a, 23b, 23c) an der Schaltkulisse (16, 35) angeordnet ist.

8. Hand- bzw. Feststellbremseinrichtung nach Anspruch 3, dadurch gekennzeichnet, daß in einem Erregungsstromkreis für die Kontrollampe (27, 27') bzw. den akustischen Signalgeber (41) in Serie zur bei Betätigung unterbrechenden Schaltvorrichtung (23, 23a, 23b, 23c) eine zweite, bei Einstellung des Betätigungsgliedes (15, 30) in die Park- bzw. Feststellbremsstellung (C) schließende Schaltvorrichtung (39) vorgesehen ist.

9. Hand- bzw. Feststellbremseinrichtung nach einem oder mehreren der Ansprüche 3 bis 8, gekennzeichnet durch die Kombination mit einer weiteren, bei Erreichen einer be- stimmten Mindestbremsbetätigung schaltenden, das Kontroll- zeichen (27, 27') mitüberwachenden Schaltvorrichtung (40).

- 3 -

10. Hand- bzw. Feststellbremseinrichtung nach Anspruch 9, für druckluftgebremste Fahrzeuge, dadurch gekennzeichnet, daß die weitere Schaltvorrichtung (40) in Abhängigkeit vom Erreichen eines eine Bremsung bewirkenden Druckes in einem Bremszylinder schaltet.

11. Handbremsventileinrichtung nach den Ansprüchen 2 und 8 sowie 9 oder 10, wobei die Handbremsventileinrichtung in der Park- bzw. Feststellbremsstellung (C) einen durch Druckluft spannbaren Federspeicherzylinder entlüftet, dadurch gekennzeichnet, daß die weitere, dritte Schaltvorrichtung (40) vom Beaufschlagungsdruck oder der Kolbenstangenbelastung des Federspeicherzylinders schaltbar bei Absinken des Beaufschlagungsdruckes auf annähernd Atmosphärendruck oder Erreichen einer bestimmten Kolbenstangenbelastung unterbrechend ausgebildet und in den Erregungsstromkreis für die Kontrollampe (27, 27') bzw. den akustischen Signalgeber (41) parallel zur vom Rastglied (10, 34) schaltbaren Schaltvorrichtung (23, 23a, 23b, 23c) und in Serie zur zweiten Schaltvorrichtung (39) eingeordnet ist.

- 1770 -

0149070

Fig. 1

Fig. 2

Fig. 3

Fig. 4

Fig. 4a

- 1770 -
0149070

Fig.5

Fig.6